# EUROPEAN PATENT SPECIFICATION

(11) **EP 4 129 581 B1**
(45) Date of publication and mention of the grant of the patent: **02.12.2026**
(21) Application number: 22197423.1
(22) Date of filing: 18.05.2017
(51) Int. Cl.: B25J 9/16, G05D 1/00

(54) **ROBOT MOTION PLANNING FOR AVOIDING COLLISION WITH MOVING OBSTACLES**
ROBOTERBEWEGUNGSPLANUNG ZUR VERMEIDUNG VON KOLLISIONEN MIT BEWEGTEN HINDERNISSEN
PLANIFICATION DE MOUVEMENT DE ROBOT POUR ÉVITER UNE COLLISION AVEC DES OBSTACLES MOBILES

(43) Date of publication of application: 08.02.2023
(62) Document number(s) of the earlier application(s) in accordance with Art. 76 EPC: 17000852.8 / 3 403 772
(73) Proprietor: KUKA Hungária Kft., 2335 Taksony (HU)
(72) Inventor: Komlósi, István, 4225 Debrecen (HU)
(74) Representative: Schlotter, Alexander Carolus Paul

(56) References cited:
- DE-A1- 102015 009 815
- US-A1- 2013 184 980
- US-A1- 2015 285 644

## Description

The present invention relates to a method and a system for planning motion(s) of one or more robots, in particular for performing said motion(s), an arrangement comprising one or more robots and such system, and a computer program product for carrying out such method.

US 8,700,307 B1 discloses a method for optimizing a trajectory for a motion of a manipulator avoiding at least one stationary obstacle whose position does not change over time.

However, obstacles in the workspace of robots may be dynamical, i.e. their position over time may change. This applies in particular to mobile robots moving on a floor which may cross paths of various dynamical obstacles, in particular other mobile robots.

DE 10 2015 009 815 discloses a method for approaching a predetermined position of a robot's TCP, in particular moving the TCP along a predetermined path, wherein said robot comprises a mobile base and a robot arm. The method comprises the steps of determining a position of an obstacle, moving the base depending on said determined position, and moving the robot arm depending on said predetermined TCP's position and said movement of the base.

US 2013/184980 A1 discloses a mobile body which plans an avoidance operation of the mobile body and an expected avoidance operation which is expected of a mobile obstacle, wherein a mobile body which moves along an operation target includes mobile obstacle detection means for detecting a mobile obstacle in the vicinity of the mobile body, approach determination means for determining whether or not the mobile obstacle and the mobile body approach each other within a predetermined interval, and operation planning means for, when the approach determination means determines that the mobile obstacle and the mobile body approach each other within the predetermined interval, planning the avoidance operation of the mobile body and an expected avoidance operation which is expected of the mobile obstacle.

One object of the present invention is to improve performance of robots in environments with dynamical obstacles.

Said object is solved in particular by a motion planning method according to present claim 1. Claims 9 - 12 refer to a method for operating robots based on motions planned as described herein and a system and a computer program product for carrying out a method as described herein respectively. Sub-claims refer to advantageous embodiments.

According to one embodiment of the present invention a motion for one robot or motions for more robots is/are planned. According to one embodiment of the present invention said motion(s) is/are performed by controlling the robot(s), in particular its/their drives, accordingly.

The robot or one or more of said robots respectively may (each) be a mobile robot comprising a platform or base respectively and drive means for moving said platform/ base, in particular horizontally, in particular on a floor. According to one embodiment drive means may comprise one or more driven and/or steerable wheels, in particular omnidirectional wheels, crawler tracks or the like. On such platform/base there may be arranged at least one robotic arm of the (mobile) robot comprising one or more, in particular at least four, in particular at least six, in particular at least seven, (actuated) joints or axes respectively.

Accordingly, motion planning may comprise, in particular be, planning motion of such platform/base(s), i.e. horizontal motion(s).

According to one embodiment of the present invention a method for motion planning for the robot or one or more of said robots comprises the steps of:
- Providing, in particular selecting and/or (pre)defining, in particular receiving, entering and/or parameterizing,
   - a start configuration which comprises one (single) or more start position(s) and
   - a destination configuration which comprises one (single) or more destination position(s)
   for the robot or each of said robots respectively;
- Providing, in particular selecting and/or (pre)defining, in particular receiving, entering and/or parameterizing, an, in particular horizontal, motion of one (single) or more (dynamical or moving) obstacle(s) in the workspace of the robot(s), said obstacle motion(s each) defining an, in particular horizontal, position of the obstacle varying over time respectively; and
- Determining a motion of the robot or each of said robots from its start to its destination configuration respectively, said robot motion(s each) defining an, in particular horizontal, position of the robot over a time period from an, in particular (robot) individual or common, start time to an, in particular (robot) individual or common, destination time respectively,
wherein the motion of the or each robot is determined with the proviso or such that at each point in time between the robot's start and destination time an or each, in particular (even) the shortest, distance between the robot and the obstacle(s) does not fall below a predetermined, in particular selectable or fixed, threshold respectively which may be (at least) zero or positive, in particular may correspond to a resolution of a discretization, according to one embodiment.

A (horizontal) position may be (defined by) or comprise a one-, two- or three-dimensional position, in particular a horizontal position, of the obstacle or the robot, in particular its (mobile) platform or base, respectively, in particular a reference thereof, e.g. a center (point) or the like.

A distance between a robot and an obstacle may be (determined as) an, in particular shortest and/or Cartesian, in particular horizontal, distance between robot and obstacle, in particular their (horizontal), in particular actual or maximal, contours, or (virtual) shells fixed to robot or obstacle respectively, in particular between their horizontal projections. Thus (not falling below) a predetermined threshold being zero may in particular correspond to said contours or shells or projections not intersecting or overlapping each other respectively, (not falling below) a positive predetermined threshold in particular to them not even touching.

Determining motions of robots such that distances between their positions and the positions of (dynamical) obstacles do not fall below predetermined thresholds can advantageously reduce a risk of collisions between the robots and the moving obstacles, thus enhancing applicability of the robot(s).

According to one embodiment providing the destination configuration comprises providing, in particular selecting and/or (pre)defining, in particular receiving, entering and/or parameterizing, the destination time for the destination position or one or more of the destination positions of the destination configuration for the robot or each of said robots respectively.

By providing (specific) destination time(s) timely, in particular synchronized, arrival(s) and thus logistics may be improved according to one embodiment.

According to one embodiment the motion(s) of the robot(s) is/are determined employing, in particular within, an, in particular common or united, state space comprising an, in particular unique, time dimension t and one or more position dimensions, in particular two position coordinates (x, y) for (each of) the robot(s) respectively.

Thus according to one embodiment a time dimension t, in particular a unique time dimension for the (motion of the) robot(s) and obstacle(s), is provided or added to a space of position(s) of the robot(s).

By employing such state space or time dimension respectively motion planning reducing a risk of collisions between robots and moving obstacles can be carried out advantageously, in particular fast(er), (more) reliable and/or with small(er) computational capacity.

Additionally or alternatively a hyperspace comprising transitions (xᵢ, yⱼ, tₖ) → (xₘ, yₙ, tₙ) between states (xᵢ, yⱼ, tₖ), (xₘ, yₙ, tₖ) of said state space ("state transitions of said state space") may be employed. In particular the motion may be determined within such hyperspace and/or regarding state transitions of or within the state space as (super- or hyper)states itself respectively.

Said hyperspace, in particular transitions between its (super- or hyper) states, may be restricted based on or by, in particular selected and/or (pre)defined, in particular entered and/or parameterized, kinematical and/or dynamical constraints, in particular predetermined maximum (tolerable and/or performable) velocities, accelerations and/or jerks of the robot(s) or the like according to one embodiment respectively.

By employing such hyperspace kinematical and/or dynamical restrictions can be advantageously taken into account or observed respectively according to one embodiment. Additionally or accordingly employing a hyperspace comprising transitions between states of the robot(s) can improve computation of its/their motion, in particular with regard to a cost function.

According to one embodiment said state space and/or hyperspace, in particular its time dimension and/or its position dimension(s) and/or its transition dimension(s), is/are discretized, in particular according to a predetermined, in particular selected and/or (pre)defined, in particular parameterized, resolution, in particular into a (time and/or position and/or transition) grid, in particular in discrete (position/transition-time) cells.

By employing a discretized state space and/or hyperspace motion planning can be carried out advantageously, in particular fast(er), (more) reliable and/or with small(er) computational capacity.

According to one embodiment the method comprises the, in particular repetitive, steps of:
- Determining a first motion of the robot(s) employing, in particular within, the state space and/or hyperspace discretized at a first resolution; and
- Determining a subsequent motion of the robot(s) employing, in particular within, a subspace of said state space and/or hyperspace in the vicinity of said first motion and/or discretized at a subsequent resolution finer than said first resolution respectively.

In particular a such-determined subsequent motion may itself again serve as a first motion of a (further) subsequent sequence of said steps according to one embodiment. A subspace of a (state or hyper)space may be a (real) subset, in particular sector, of said space according to one embodiment.

In other words, a state space and/or hyperspace may be narrowed to a vicinity of a determined motion and/or discretized finer, i.e. with a higher resolution, in particular in a vicinity of a determined motion when (iteratively) optimizing said motion.

Thereby motion planning can be carried out advantageously, in particular fast(er), (more) reliable and/or with small(er) computational capacity.

According to one embodiment determining the motion of the robot(s) comprises, in particular is, finding a trajectory within said, in particular common, state space and/or hyperspace avoiding cells occupied by the obstacle(s).

Thereby motion planning can be carried out advantageously, in particular fast(er), (more) reliable and/or with small(er) computational capacity.

According to one embodiment the, in particular said first and/or subsequent, motion(s) of the robot(s) is/are determined with the provisio or such that a defined one- or multi-dimensional cost function is optimized or by optimizing, in particular minimizing, said cost function respectively, and/or until a one- or multi-dimensional predefined criterion is met, in particular a predefined resolution and/or iteration and/or computational time threshold is reached, and/or employing a A* algorithm, in particular a Dynamic A* (D*), D* Lite, Constrained D*, DD* Lite, Field D*, in particular Multi-Resolution Field D*, algorithm, in particular as described in HART, P. E., NILSSON, N. J., RAPHAEL, B. (1968): A Formal Basis for the Heuristic Determination of Minimum Cost Paths, In. Systems Science and Cybernetics, IEEE Transactions on SSC4 Vol. 4 Issue 2, pp. 100-107, STENTZ, A. (T.) (1994): Optimal and Efficient Path Planning for Partially-Known Environments, Proceedings of the IEEE International Conference on Robotics and Automation (ICRA '94), pp. 3310-3317, KOENIG, S., AND LIKHACHEV, M. D*lite. In AAAI/IAAI (2002), pp. 476-483, A. Stentz. Constrained dynamic route planning for unmanned ground vehicles. In Proceedings of the 23rd Army Science Conference, 2002, G. Ayorkor Korsah, Anthony (Tony) Stentz , and M Bernardine Dias, "DD* Lite: Efficient Incremental Search with State Dominance," Twenty-First National Conference on Artificial Intelligence (AAAI-06), July, 2006, pp. 1032-1038, David Ferguson and Anthony (Tony) Stentz , "Field D*: An Interpolation-based Path Planner and Replanner," Proceedings of the International Symposium on Robotics Research (ISRR), October, 2005 or David Ferguson and Anthony (Tony) Stentz , "Multi-resolution Field D*," Proceedings of the International Conference on Intelligent Autonomous Systems (IAS), March, 2006 respectively, the content of which is incorporated by reference.

The cost function may depend on, in particular comprise or be, energy (consumption) of the robot(s), smoothness of the motion(s) and the like according to one embodiment.

By each of these features, in particular by combination thereof, motion planning can be carried out advantageously, in particular fast(er), (more) reliable and/or with small(er) computational capacity. In particular A* algorithm may in particular improve re-planning capabilities with regard to altering obstacle movements.

According to one embodiment the determined, in particular said first and/or subsequent, motion(s) of the robot(s) is/are smoothened, in particular by filtering.

This may provide advantageous motion(s), in particular when employing a discretized state space and/or hyperspace, in particular with low resolution.

According to one embodiment the motion(s) of the obstacle or one or more of the obstacles is/are altered, in particular by providing altered motion(s), in particular redefining, in particular re-parameterizing, initially provided obstacle motion(s), and the motion(s) of the robot(s) is/are re-determined as described herein with respect to said altered obstacle motion(s).

Thus, the motion planning may be adapted to obstacles altering their motions, in particular online, i.e. while the robot motion(s) is/are planned or (already) performed.

As already emphasized before, a motion of a single robot or motions of one robot and one or more further robots may be planned as described herein, the latter with the additional constraint that the motions of these robots are - at least finally - determined such that at each point in time between start and destination time of the robots also an or each, in particular (even) the shortest distance between the robots does not fall below an, in particular the same, predetermined threshold, in particular a or the selectable or fixed, threshold respectively which may be (at least) zero or positive, in particular may correspond to a resolution of a discretization, according to one embodiment. A distance between a robot and further robot may be defined as described herein with respect to a distance between a robot and an obstacle.

In case of such multi-robot motion planning a (common) state space comprising a (unique) time dimension and position dimensions for each of the robots and/or a (common) hyperspace comprising state transitions of said (common) state space may be employed.

According to one embodiment determining the motions of the robots comprises, in particular is, finding a trajectory within said common state space and/or hyperspace avoiding cells occupied by the obstacle as well as cells corresponding to simultaneous positions of two or more robots.

Let in general (X_{R1}(t), Y_{R1}(t)) denote positions of one (first) robot R1 at time t and (X_{R2}(t), y_{R2}(t)) denote positions of a further (second) robot R2 at time t. Then determining the motions of the robots R1, R2 between t₀ and tₙ may comprise finding a trajectory within common state space {x_{R1}×y_{R1}×x_{R2×}y_{R2×}t} avoiding ₍x_{R1}, y_{R1}) = (x_{R2}, y_{R2}) at each t ∈ [t₀, tₙ] as well as each state occupied by an obstacle and/or employing the corresponding hyperspace. If said common state space and/or hyperspace is discretized than each discretized cell occupied by an obstacle as well as each discretized cell denoting or corresponding to a simultaneous position of two or more robots may be avoided while or in order to find(ing) the trajectory or determine the (coordinated) motions respectively.

Since the overall dimension of such (common) state space and/or hyperspace can be quite large, it can be advantageous to first determine initial motions of the robots from their start to their destination configurations individually, in particular independently of one another, as described before, in particular (just) such that for each robot at each point in time between start and destination time of the robot an or each, in particular (even) the shortest, distance between the robot and the obstacle(s) does not fall below a predetermined threshold, and to subsequently determine motions of two or more, in particular all, of said robots from their start to their destination configurations such that at each point in time between start and destination time of the robots (also) an or each, in particular the shortest, distance between robots does not fall below a, in particular the same, predetermined threshold based on, in particular starting with or in the vicinity of, said initial motions ("coordinated (robot) motions") respectively.

It turned out that such two-stage approach may significantly improve multi-robot motion planning, in particular with regard to computational speed and/or capacity.

Means in the sense of the present invention can be implemented by hardware and/or software. They may in particular comprise one or more, in particular digital, computational, in particular micro-processing, unit(s) (CPU(s)), preferably data and/or signal-connected to a storage and/or bus system, and/or one or more programs or program modules. The CPU(s) may be adapted to execute instructions which are implemented by or as a program stored in an, in particular common or distributed, storage system or medium respectively, receive input signals from one or more data buses and/or sent output signals to such data bus(es). A storage system may comprise one or more, in particular different, storage media, in particular optical, magnetic, solid state and/or other non-volatile media. The program(s) may be such that it/they implement(s) or can carry out the method(s) described herein respectively, such that the CPU(s) can execute the method steps and thus plan, in particular perform, the motion(s), in particular by controlling the robot(s) accordingly.

According to one embodiment one or more, in particular all, steps of the method as described herein are executed fully or partially automatic, in particular by the system or its means respectively.

According to one embodiment of the present invention a system is adapted, in particular with respect to hard- and/or software, for carrying out a method described herein and/or comprises:
Means for providing a start configuration comprising at least one start position and a destination configuration comprising at least one destination position for the robot; Means for providing a motion of at least one obstacle in the workspace of the robot, said obstacle motion defining a position of the obstacle varying over time; and
Means for determining a motion of the robot from its start configuration to its destination configuration, said robot motion defining a position of the robot over a time period from a start time to a destination time, such that at each point in time between start and destination time a distance between the robot and the obstacle does not fall below a predetermined threshold.

According to one embodiment the system or its means respectively comprises:
- Means for providing the destination time for at least one destination position of the destination configuration; and/or
- Means for determining the robot motion employing a state space comprising a time dimension and at least one position dimension and/or a hyperspace comprising state transitions of said state space; and/or
- Means for discretizing said state space and/or hyperspace; and/or
- Means for, in particular repetitively, determining a first motion of the robot employing the state space and/or hyperspace discretized at a first resolution and determining a subsequent motion of the robot employing a subspace of said state space and/or hyperspace in the vicinity of said first motion and/or discretized at a subsequent resolution finer than said first resolution; and/or
- Means finding a trajectory within said state space and/or hyperspace avoiding cells occupied by the obstacle; and/or
- Means for determining the motion of the robot such that a defined cost function is optimized, until a predefined criterion is met and/or employing a A* algorithm; and/or
- Means for smoothing, in particular filtering, the determined motion of the robot; and/or
- Means for altering the motion of the obstacle in the workspace of the robot and re-determining the motion of the robot as described herein, in particular in the vicinity of its previously determined motion; and/or
- Means for providing a start configuration comprising at least one start position and a destination configuration comprising at least one destination position for at least one further robot and determining a motion of the further robot from its start to its destination configuration as described herein, wherein the motions of the robots are determined such that at each point in time between start and destination time of the robots a distance between the robots does not fall below a predetermined threshold; and/or
- Means for determining initial motions of the robots from their start to their destination configurations individually such that for each robot at each point in time between start and destination time of the robot a distance between the robot and the obstacle does not fall below a predetermined threshold, and determining coordinated motions of the robots from their start to their destination configurations such that at each point in time between start and destination time of the robots a distance between the robots does not fall below a predetermined threshold based on, in particular in the vicinity of, said initial motions; and/or
- Means for operating at least one robot comprising means for determining a motion of the at least one robot as described herein and controlling the at least one robot to perform said motion.

Further features of the present invention are disclosed in the sub-claims and the following description of preferred embodiments. Thereto it is shown, partially schematically, in:
- Fig. 1:: steps of a method of motion planning for at least one robot according to an embodiment of the present invention;
- Fig. 2:: the method of motion planning;
- Fig. 3:: an arrangement comprising at least one robot and a system (for) carrying out the method; and
- Fig. 4:: a state space employed in the motion planning.

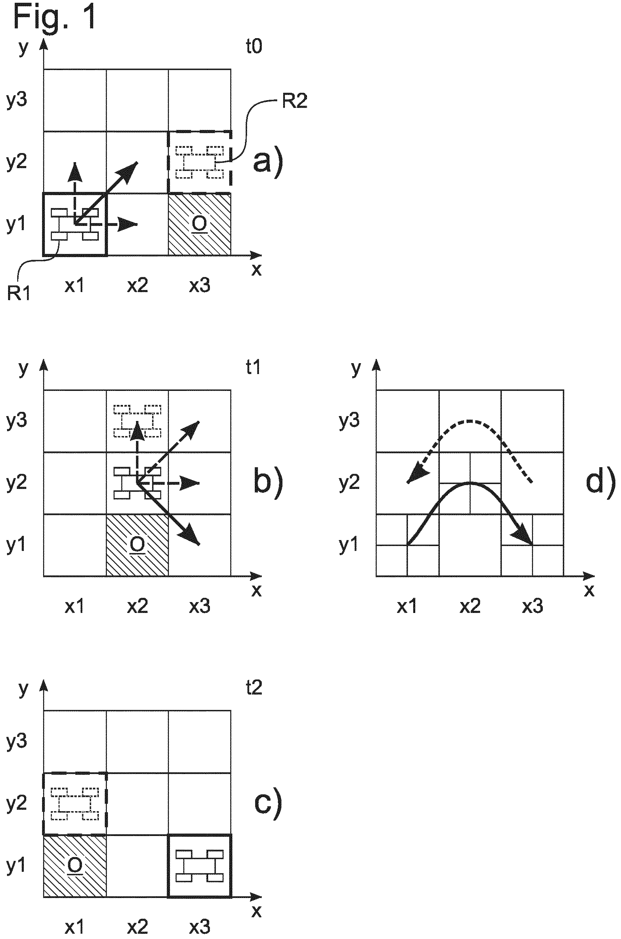

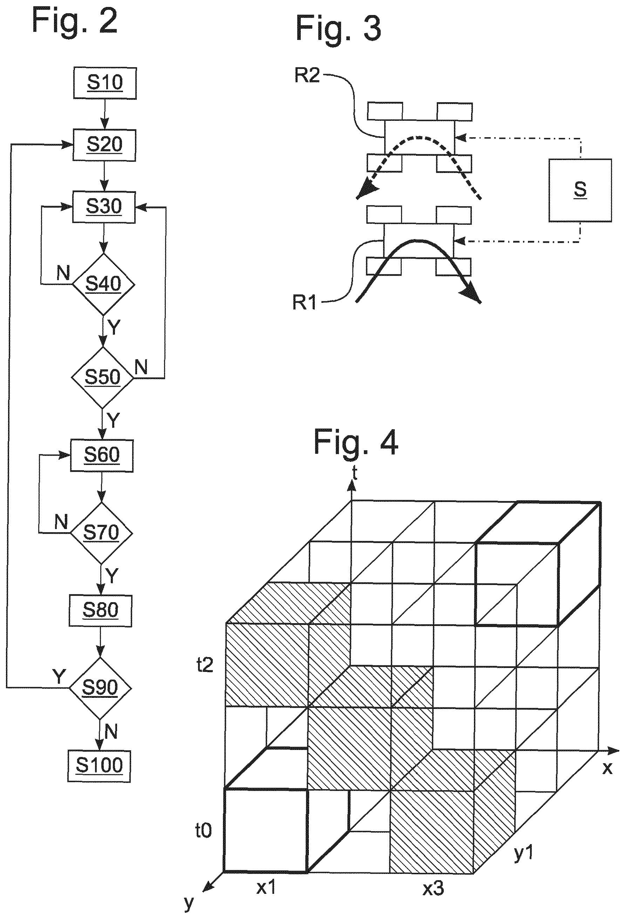

Fig. 1, 2 show steps of a method of motion planning for one or two mobile robots R1, R2 of an arrangement by a system S of said arrangement (cf. Fig. 3) according to an embodiment of the present invention.

In a first step S10 start and destination configurations for mobile robot R1 are provided by a user, e.g. by entering corresponding values into system S. A horizontal start position (x1, y1) on a floor at a start time t0 and a horizontal destination position (x3, y1) at a predefined destination time t2 are indicated by bold frames in Fig. 1 a), c) and Fig. 4 respectively.

If a coordinated motion also of mobile robot R2 is to be planned then a start position (x3, y2) at start time t0 and a destination position (x1, y2) at destination time t2 are provided as well in step S10 as indicated in dashed lines in Fig. 1 a) and c) respectively.

Subsequently (cf. step S20), parallel or before, a linear motion of a dynamical obstacle O is provided between (x3, y1) at t0 and (x1, y1) at t2 as indicated by a shaded cell in Fig. 1 a) - c) and Fig. 4.

In step S30 the state space (x, y, t) is discretized at a first resolution as indicated by corresponding discrete cells of the horizontal floor at discrete times t0, t1 and t2 in Fig. 1 a) - c) and Fig. 4.

Next, a motion of mobile robot R1 is determined by an D* Lite algorithm such that cells occupied by robot R1 and obstacle O are not identical but neighbouring at least while minimizing energy consumption as a cost function in step S30.

Thereto transitions between states of said discretized state space are employed to satisfy predefined kinematical and dynamical restrictions as indicated by arrows in Fig. 1 a) - c). Just as a simple example for better understanding in Fig. 1 b) no immediate return from (x2, y2) to (x1, y1) is possible or taken into account respectively since the required reverse motion would exceed drive capability of the mobile robot R1.

Since energy consumption is employed as cost function, a certain contribution of energy consumption can be assigned to each such state transition which corresponds to a (super- or hyper)state of a hyperspace comprising state transitions of said state space (x, y, t). Thus the contribution of energy consumption can be assigned to corresponding super- or hyperstates of said hyperspace respectively, which allows for improved computation of the motion.

This first motion is schematically indicated by the sequence Fig. 1 a) - c). Determining said motion can be understood as finding a trajectory of minimal energy consumption connecting (x1, y1, t0) and (x3, y1, t2) while avoiding the cells (x3, y1, t0), (x2, y1, t1) and (x1, y1, t2).

This is illustrated by Fig. 4 showing said discretized state space with said cells (x3, y1, t0), (x2, y1, t1) and (x1, y1, t2) occupied by moving obstacle O (shaded in Fig. 4) and start and destination configuration of R1 (bold in Fig. 4).

In subsequent step S40 the resolution of the state space's discretization is increased in the vicinity of the motion determined in step S30 as indicated by Fig. 1d).

As long as a predefined threshold for the resolution of the state space or its discretization respectively has not yet been reached (S40: "N"), the method or system S respectively returns to step S30, determining a (further) subsequent motion of R1 within a state space which is (further) restricted to the vicinity of the foregoing (first) motion and discretized at the (further) increased resolution (cf. Fig. 1 d)).

If said criterion is met (S40: "Y"), the method or system S respectively proceeds with step S50, therein checking whether all robots' motions have been determined.

If - according to one embodiment - only robot R1's motion is to be planned, the method or system S respectively proceeds with step S60.

If - according to another embodiment - also motion of mobile robot R2 is to be planned then the method or system S respectively returns to step S30 and determines such motion as described before, starting again with the first resolution.

As one understands therefrom, those initial motions of robots R1, R2 are initially determined individually, in particular independently from one another, in steps S30 - S50.

This results in an initial motion (x3, y2, t0) → (x2, y2, t1) → (x1, y2, t2) for R2 which thus would collide with R1 at its initial motion (x1, y1, t0) → (x2, y2, t1) → (x3, y1, t2).

Thus, starting with these initial motions of R1, R2, in step S60 coordinated motions are determined in step S60.

This may be implemented as described before with respect to the individual motions but within a common state space comprising the (discretized) unique time dimension t and position dimensions (x_{R1}, y_{R1}) for robot R1 and position dimensions (x_{R2}, y_{R2}) for robot R2 ({x_{R1} × y_{R1} × x_{R2} × y_{R2} × t}). Thus the coordinated motions are determined as a trajectory in said common state space with higher dimension 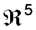 in which states or discrete cells (x_{R1}=a, y_{R1}=b, x_{R2}=a, y_{R2}=b,t=c) are avoided or forbidden respectively as are states or discrete cells occupied by the obstacle(s).

Again such coordinated motions may be iteratively optimized until a predefined criterion is met (S70: "Y"), e.g. a maximum computing time has been lapsed or the like.

In step S80 said coordinated motions are smoothened by filtering as indicated in Fig. 1 d)).

In step S90 the method or system S respectively checks whether the motion of obstacle O has altered. If so (S90: "Y"), motions of R1 (and R2 as the case may be) are re-planed as described above with respect to steps S20 - S80, starting with the already determined motions as a basis.

Otherwise (S90: "N") the planned motion(s) is/are performed by controlling the robots R1, R2 accordingly (cf. step S100 and Fig. 3).

While at least one exemplary embodiment has been presented in the foregoing summary and detailed description, it should be appreciated that a vast number of variations exist. It should also be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

In particular for easier understanding determining the motions has been illustrated in particular with respect to the state space itself. However, as already explained before, its hyperspace comprising the state transitions may be employed additionally or alternatively.

For example instead of start position (x1, y1, t0) possible state transitions {(x1, y1, t0) → (x2, y1, t1), (x1, y1, t0) → (x1, y2, t1), (x1, y1, t0) → (x2, y2, t1)} may be employed and the like.

Then for example a state transition (x2, y2, t1) → (x1, y1, t2) corresponding to a reverse motion exceeding drive capabilities corresponds to a (super- or hyper)state of such hyperspace. By avoiding or forbidding said (super- or hyper)state the corresponding dynamic constraint can easily be observed.

Additionally, energy consumption required for e.g. a state transition (x1, y1, t0) → (x2, y2, t1) can be assigned to the corresponding (super- or hyper)state, thus facilitating computation of the cost function.

### REFERENCE NUMBERS

- O: obstacle
- R1: mobile robot
- R2: further mobile robot
- S: system

## Claims

1. A method for motion planning for at least one robot (R1), the method comprising the steps of:
- Providing (S10) a start configuration comprising at least one two-dimensional start position and a destination configuration comprising at least one two-dimensional destination position for a mobile base of the robot;
- Providing (S20) a motion of at least one obstacle (O) in the workspace of the robot, said obstacle motion defining a two-dimensional position of the obstacle varying over time; and
- Determining (S30, S60) a motion of the robot from its start configuration to its destination configuration, said robot motion defining a two-dimensional position of the robot over a time period from a start time to a destination time,
wherein the robot motion is determined such that at each point in time between start and destination time a distance between the robot and the obstacle does not fall below a predetermined threshold;
wherein determining the motion of the robot comprises finding a trajectory within a discretized state space and hyperspace avoiding cells occupied by the obstacle, said state space comprising a time dimension and two position coordinates for the robot, said hyperspace comprising transitions between states of said state space; wherein transitions between states of said hyperspace are restricted based on kinematical and/or dynamical contraints.

2. The method according to the preceding claim, wherein providing the destination configuration comprises providing (S10) the destination time for at least one destination position of the destination configuration.

3. The method according to one of the preceding claims, comprising the, in particular repetitive, steps of:
- Determining a first motion of the robot employing the state space and/or hyperspace discretized at a first resolution; and
- Determining a subsequent motion of the robot employing a subspace of said state space and/or hyperspace in the vicinity of said first motion and/or discretized at a subsequent resolution finer than said first resolution.

4. The method according to one of the preceding claims, wherein the motion of the robot is determined such that a defined cost function is optimized, until a predefined criterion is met and/or employing a A* algorithm.

5. The method according to one of the preceding claims, comprising the step of smoothing, in particular filtering (S80), the determined motion of the robot.

6. The method according to one of the preceding claims, comprising the steps of:
- Altering the motion of the obstacle in the workspace of the robot; and
- Re-determining the motion of the robot according to one of the preceding claims.

7. The method according to one of the preceding claims, comprising the steps of:
- Providing (S10) a start configuration comprising at least one start position and a destination configuration comprising at least one destination position for at least one further robot (R2); and
- Determining (S30, S60) a motion of the further robot from its start to its destination configuration according to one of the preceding claims,
wherein the motions of the robots are determined such that at each point in time between start and destination time of the robots a distance between the robots does not fall below a predetermined threshold.

8. The method according to the preceding claim, comprising the steps of:
- Determining (S30) initial motions of the robots from their start to their destination configurations individually such that for each robot at each point in time between start and destination time of the respective robot a distance between the respective robot and the obstacle does not fall below a predetermined threshold; and
- Determining (S60) coordinated motions of the robots from their start to their destination configurations based on, in particular in the vicinity of, said initial motions.

9. A method for operating at least one robot (R1, R2), comprising the steps of:
Determining a motion of the at least one robot according to one of the preceding claims; and
Controlling (S100) the at least one robot to perform said motion.

10. A system (S) for motion planning for, in particular operating, at least one robot (R1, R2), the system being adapted for carrying out the method according to one of the preceding claims.

11. An arrangement comprising at least one robot (R1, R2) and a system (S) according to claim 10.

12. A computer program product comprising source code recorded on a computer-readable data carrier for carrying out the method according to one of claims 1-9.

## Patentansprüche

1. Verfahren zur Bewegungsplanung für wenigstens einen Roboter (R1), wobei das Verfahren die Schritte aufweist:
- Bereitstellen (S10) einer Startkonfiguration, die wenigstens eine zweidimensionale Startposition aufweist, und einer Zielkonfiguration, die wenigstens eine zweidimensionale Zielposition aufweist, für eine mobile Basis des Roboters;
- Bereitstellen (S20) einer Bewegung wenigstens eines Hindernisses (O) im Arbeitsraum des Roboters, wobei die Hindernisbewegung eine sich über die Zeit ändernde zweidimensionale Position des Hindernisses definiert; und
- Ermitteln (S30, S60) einer Bewegung des Roboters von seiner Startkonfiguration zu seiner Zielkonfiguration, wobei die Roboterbewegung eine zweidimensionale Position des Roboters über einen Zeitraum von einem Startzeitpunkt bis zu einem Zielzeitpunkt definiert,
wobei die Roboterbewegung derart ermittelt wird, dass zu jedem Zeitpunkt zwischen Start- und Zielzeitpunkt ein Abstand zwischen dem Roboter und dem Hindernis einen vorgegebenen Schwellwert nicht unterschreitet;
wobei das Ermitteln der Bewegung des Roboters das Auffinden einer Trajektorie innerhalb eines diskretisierten Zustandsraums und Hyperraums unter Vermeidung von durch das Hindernis belegten Zellen aufweist, wobei der Zustandsraum eine Zeitdimension und zwei Positionskoordinaten für den Roboter aufweist und der Hyperraum Übergänge zwischen Zuständen des Zustandsraums aufweist;
wobei Übergänge zwischen Zuständen des Hyperraums auf Basis kinematischer und/oder dynamischer Beschränkungen eingeschränkt sind.

2. Verfahren nach dem vorhergehenden Anspruch, wobei das Bereitstellen der Zielkonfiguration das Bereitstellen (S10) des Zielzeitpunkts für wenigstens eine Zielposition der Zielkonfiguration aufweist.

3. Verfahren nach einem der vorhergehenden Ansprüche, das die, insbesondere wiederholt ausgeführten, Schritte aufweist:
- Ermitteln einer ersten Bewegung des Roboters unter Verwendung des mit einer ersten Auflösung diskretisierten Zustandsraums und/oder Hyperraums; und
- Ermitteln einer nachfolgenden Bewegung des Roboters unter Verwendung eines Unterraums des Zustandsraums und/oder Hyperraums in der Umgebung der ersten Bewegung und/oder diskretisiert mit einer nachfolgenden Auflösung, die feiner als die erste Auflösung ist.

4. Verfahren nach einem der vorhergehenden Ansprüche, wobei die Bewegung des Roboters derart ermittelt wird, dass eine definierte Kostenfunktion optimiert wird, bis ein vordefiniertes Kriterium erfüllt ist, und/oder unter Verwendung eines A*-Algorithmus.

5. Verfahren nach einem der vorhergehenden Ansprüche, das den Schritt des Glättens, insbesondere Filterns (S80), der ermittelten Bewegung des Roboters aufweist.

6. Verfahren nach einem der vorhergehenden Ansprüche, das die Schritte aufweist:
- Ändern der Bewegung des Hindernisses im Arbeitsraum des Roboters; und
- erneutes Ermitteln der Bewegung des Roboters nach einem der vorhergehenden Ansprüche.

7. Verfahren nach einem der vorhergehenden Ansprüche, das die Schritte aufweist:
- Bereitstellen (S10) einer Startkonfiguration, die wenigstens eine Startposition aufweist, und einer Zielkonfiguration, die wenigstens eine Zielposition aufweist, für wenigstens einen weiteren Roboter (R2); und
- Ermitteln (S30, S60) einer Bewegung des weiteren Roboters von seiner Startkonfiguration zu seiner Zielkonfiguration nach einem der vorhergehenden Ansprüche,
wobei die Bewegungen der Roboter derart ermittelt werden, dass zu jedem Zeitpunkt zwischen Start- und Zielzeitpunkt der Roboter ein Abstand zwischen den Robotern einen vorgegebenen Schwellwert nicht unterschreitet.

8. Verfahren nach dem vorhergehenden Anspruch, das die Schritte aufweist:
- Ermitteln (S30) initialer Bewegungen der Roboter von ihren Startkonfigurationen zu ihren Zielkonfigurationen einzeln derart, dass für jeden Roboter zu jedem Zeitpunkt zwischen Start- und Zielzeitpunkt des jeweiligen Roboters ein Abstand zwischen dem jeweiligen Roboter und dem Hindernis einen vorgegebenen Schwellwert nicht unterschreitet; und
- Ermitteln (S60) koordinierter Bewegungen der Roboter von ihren Startkonfigurationen zu ihren Zielkonfigurationen auf Basis der initialen Bewegungen, insbesondere in deren Umgebung.

9. Verfahren zum Betreiben wenigstens eines Roboters (R1, R2), mit den Schritten:
Ermitteln einer Bewegung des wenigstens einen Roboters nach einem der vorhergehenden Ansprüche; und
Steuern (S100) des wenigstens einen Roboters zum Ausführen dieser Bewegung.

10. System (S) zur Bewegungsplanung für wenigstens einen Roboter (R1, R2), insbesondere zum Betreiben des wenigstens einen Roboters, wobei das System zur Durchführung des Verfahrens nach einem der vorhergehenden Ansprüche eingerichtet ist.

11. Anordnung mit wenigstens einem Roboter (R1, R2) und einem System (S) nach Anspruch 10.

12. Computerprogrammprodukt mit einem Programmcode, der auf einem computerlesbaren Datenträger gespeichert ist, zur Durchführung des Verfahrens nach einem der Ansprüche 1 bis 9.

## Revendications

1. Procédé de planification de mouvement pour au moins un robot (R1), le procédé comprenant les étapes suivantes :
- la fourniture (S10) d'une configuration de départ comprenant au moins une position de départ bidimensionnelle et d'une configuration d'arrivée comprenant au moins une position d'arrivée bidimensionnelle pour une base mobile du robot ;
- la fourniture (S20) d'un mouvement d'au moins un obstacle (O) dans l'espace de travail du robot, ledit mouvement d'obstacle définissant une position bidimensionnelle de l'obstacle variant dans le temps ; et
- la détermination (S30, S60) d'un mouvement du robot de sa configuration de départ à sa configuration d'arrivée, ledit mouvement de robot définissant une position bidimensionnelle du robot sur une période de temps allant d'une heure de départ à une heure d'arrivée,
dans lequel le mouvement de robot est déterminé de sorte qu'à chaque moment entre l'heure de départ et l'heure d'arrivée, une distance entre le robot et l'obstacle ne passe pas en dessous d'un seuil prédéterminé ;
dans lequel la détermination du mouvement du robot comprend la recherche d'une trajectoire au sein d'un espace d'états discrétisé et d'un hyperespace évitant des cellules occupées par l'obstacle, ledit espace d'états comprenant une dimension temporelle et deux coordonnées de position pour le robot, ledit hyperespace comprenant des transitions entre des états dudit espace d'états ;
dans lequel des transitions entre des états dudit hyperespace sont restreintes sur la base de contraintes cinématiques et/ou dynamiques.

2. Procédé selon la revendication précédente, dans lequel la fourniture de la configuration d'arrivée comprend la fourniture (S10) de l'heure d'arrivée pour au moins une position d'arrivée de la configuration d'arrivée.

3. Procédé selon l'une des revendications précédentes, comprenant les étapes, notamment répétitives, suivantes :
- la détermination d'un premier mouvement du robot employant l'espace d'états et/ou l'hyperespace discrétisé à une première résolution ; et
- la détermination d'un mouvement ultérieur du robot employant un sous-espace dudit espace d'états et/ou hyperespace à proximité dudit premier mouvement et/ou discrétisé à une résolution ultérieure plus fine que ladite première résolution.

4. Procédé selon l'une des revendications précédentes, dans lequel le mouvement du robot est déterminé de manière à ce qu'une fonction de coût définie soit optimisée, jusqu'à ce qu'un critère prédéfini soit rempli et/ou en employant un algorithme A*.

5. Procédé selon l'une des revendications précédentes, comprenant l'étape de lissage, notamment de filtrage (S80), du mouvement déterminé du robot.

6. Procédé selon l'une des revendications précédentes, comprenant les étapes suivantes :
- la modification du mouvement de l'obstacle dans l'espace de travail du robot ; et
- la redétermination du mouvement du robot selon l'une des revendications précédentes.

7. Procédé selon l'une des revendications précédentes, comprenant les étapes suivantes :
- la fourniture (S10) d'une configuration de départ comprenant au moins une position de départ et d'une configuration d'arrivée comprenant au moins une position d'arrivée pour au moins un robot (R2) supplémentaire ; et
- la détermination (S30, S60) d'un mouvement du robot supplémentaire de sa configuration de départ à sa configuration d'arrivée selon l'une des revendications précédentes,
dans lequel les mouvements des robots sont déterminés de sorte qu'à chaque moment entre l'heure de départ et l'heure d'arrivée des robots, une distance entre les robots ne passe pas en dessous d'un seuil prédéterminé.

8. Procédé selon la revendication précédente, comprenant les étapes suivantes :
- la détermination (S30) de mouvements initiaux des robots de leur configuration de départ à leur configuration d'arrivée individuellement de sorte que, pour chaque robot à chaque moment entre l'heure de départ et l'heure d'arrivée du robot respectif, une distance entre le robot respectif et l'obstacle ne passe pas en dessous d'un seuil prédéterminé ; et
- la détermination (S60) de mouvements coordonnés des robots de leur configuration de départ à leur configuration d'arrivée sur la base, notamment à proximité, desdits mouvements initiaux.

9. Procédé de fonctionnement d'au moins un robot (R1, R2), comprenant les étapes suivantes :
la détermination d'un mouvement de l'au moins un robot selon l'une des revendications précédentes ; et
la commande (S100) de l'au moins un robot afin qu'il réalise ledit mouvement.

10. Système (S) de planification de mouvement pour, notamment faire fonctionner, au moins un robot (R1, R2), le système étant adapté pour mettre en œuvre le procédé selon l'une des revendications précédentes.

11. Agencement comprenant au moins un robot (R1, R2) et un système (S) selon la revendication 10.

12. Produit de programme informatique comprenant un code source enregistré sur un support de données lisible par ordinateur pour mettre en œuvre le procédé selon l'une des revendications 1 à 9.
